# FASCICULE DE BREVET EUROPEEN

(11) **EP 0 656 469 B1**
(45) Date de publication et mention de la délivrance du brevet: **12.08.1998**
(21) Numéro de dépôt: 94402142.7
(22) Date de dépôt: 27.09.1994
(51) Int. Cl.: F02K 1/76, F01D 21/04

(54) **Installation de sécurité pour inverseur de poussée**
Sicherungsgerät für Schubumkehrklappen
Security means for a thrust reverser

(30) Priorité: 19.11.1993 FR 9313835
(43) Date de publication de la demande: 07.06.1995
(73) Titulaire: SOCIETE DE CONSTRUCTION DES AVIONS HUREL-DUBOIS (société anonyme), F-92360 Meudon-La-Forêt (FR)
(72) Inventeur: Labouré, Bernard, F-78140 Velizy (FR); Standish, Robert, F-78125 Gazeran (FR)
(74) Mandataire: Sauvage, Renée

(56) Documents cités:
- FR-A- 2 494 775
- FR-A- 2 500 537
- FR-A- 2 683 860

## Description

La présente invention concerne les installations d'inversion de poussée à portes pour moteur d'avion du type à réaction et plus particulièrement les installations comportant des systèmes de sécurité interdisant l'ouverture intempestive des portes d'inverseur, notamment alors que l'avion est en vol de croisière.

On sait que les impératifs de sécurité imposent de prévoir des solutions répondant efficacement à des incidents, même fort improbables, pouvant se produire en vol. C'est le cas notamment des inverseurs à portes dont on doit impérativement interdire toute ouverture non souhaitée en vol de croisière. Dans ce but, on a déjà proposé des systèmes de sécurité des portes comme par exemple dans la demande de brevet français n° 2 494 775 déposée le 27 Novembre 1980 au nom de ASTECH et dans la demande de brevet français n° 2 683 860 déposée le 14 Novembre 1991 sous le n° 91 14011 au nom de la demanderesse.

Pour des raisons structurelles, ces systèmes de sécurité sont disposés dans un même plan transversal à l'axe du moteur. Or, les règles de sécurité imposent que dans le cas où une pièce tournante du moteur, par exemple un disque de turbine, viendrait à se détacher et détériorerait le capotage extérieur du moteur (en y créant une déchirure par exemple), un tel incident soit néanmoins sans effet sur le maintien des portes d'inverseur en position escamotée. Si cependant la pièce tournante, qui par l'effet de la force centrifuge a une trajectoire sensiblement radiale, est projetée sensiblement dans le plan transversal contenant les systèmes de sécurité, le risque est important que ceux-ci soient endommagés, sinon détruits, ne jouent plus alors leur rôle et permettent l'ouverture intempestive des portes.

La présente invention propose une solution simple à une telle situation qui élimine pratiquement tout risque d'ouverture intempestive des portes en cas d'incident.

Bien que susceptible d'être étendue à tout type d'inverseurs à portes, l'invention s'applique particulièrement aux installations d'inversion de poussée présentant une série de portes basculantes articulées autour de pivots dans une structure fixe d'un capotage entourant le moteur à peu près concentriquement à l'axe longitudinal dudit moteur, les portes étant susceptibles de basculer, sous l'action d'un vérin de commande, entre une position escamotée, dite "de croisière" dans laquelle elles obturent des ouvertures pratiquées dans la structure fixe du capotage et une position déployée, dite "d'inversion" dans laquelle elles font saillie radialement vers l'extérieur du capotage en dégageant les ouvertures par lesquelles le flux de gaz moteur peut être dévié radialement vers l'extérieur.

A l'instar de FR-A-2 494 775, l'installation selon l'invention comporte un système de sécurité de portes constitué, pour chaque porte, d'au moins deux verrous indépendants agissant respectivement entre la structure fixe du capotage et une partie correspondante de la porte. L'invention se distingue toutefois de cet art antérieur par le fait, d'une part, que les deux verrous sont écartés l'un de l'autre dans le sens de l'axe longitudinal du moteur et, d'autre part, que ces deux verrous sont associés respectivement à des circuits de commande d'ouverture indépendants l'un de l'autre.

Grâce à une disposition des verrous sur deux plans transversaux distincts et écartés, on élimine pratiquement tout risque d'endommagement simultané des deux verrous du système de sécurité.

Dans le cas où les portes et les ouvertures dans le capotage dans lesquelles elles sont logées ont une forme générale à peu près rectangulaire, les deux verrous seront disposés respectivement sur deux côtés adjacents de chaque ouverture de capotage. Lorsque la structure fixe de capotage présente un cadre annulaire amont (par rapport au sens de circulation des gaz) et des poutres longitudinales délimitant respectivement les bords amont et latéraux des ouvertures de capotage, l'un des verrous est avantageusement monté sur le cadre annulaire amont pour coopérer avec un élément complémentaire du bord amont de la porte, tandis que l'autre verrou est monté sur une poutre longitudinale pour coopérer avec un élément de verrou complémentaire ménagé dans le bord latéral de la porte.

Afin de conserver à la porte une bonne rigidité et éviter des efforts trop importants sur le verrou latéral en cas de destruction du verrou amont, les verrous latéraux montés sur les poutres seront situés dans l'espace compris entre le pivot de porte, logé dans une desdites poutres, et le cadre annulaire amont et de préférence, la distance comprise entre le verrou et le cadre amont sera inférieure ou égale à la moitié de la distance entre le cadre amont et le pivot de porte. Il convient cependant que le verrou latéral ne se trouve pas trop près du cadre amont pour éviter qu'il ne soit touché par la projection d'un disque de turbine qui détruirait le verrou amont. C'est pourquoi on fera en sorte que le verrou latéral soit situé à une distance du cadre amont comprise entre la moitié et le quart de la distance entre le cadre amont et le pivot de porte.

De préférence, l'élément complémentaire de verrou est situé à une distance du bord amont de porte comprise entre la moitié et le quart de la distance entre le bord amont et le pivot de porte.

Dans une forme d'exécution préférée, le verrou monté sur la poutre de capotage a la forme d'un crochet pivotant et l'élément complémentaire de verrou porté par la porte est un ergot fixe.

En position de porte fermée, le verrou monté sur la poutre de capotage, une fois en prise avec l'élément du verrou complémentaire, est avantageusement immobilisé en position par un mécanisme de blocage automatique qui ne peut être libéré que par une action volontaire sur un circuit de commande indépendant de l'actionnement du verrou.

Comme indiqué plus haut, le basculement des portes est réalisé par des vérins, chaque porte étant attelée à un vérin, de sorte qu'un tel vérin constitue lui-même un troisième verrou de sécurité pour interdire l'ouverture intempestive de la porte grâce à un moyen de verrouillage qu'il contient.

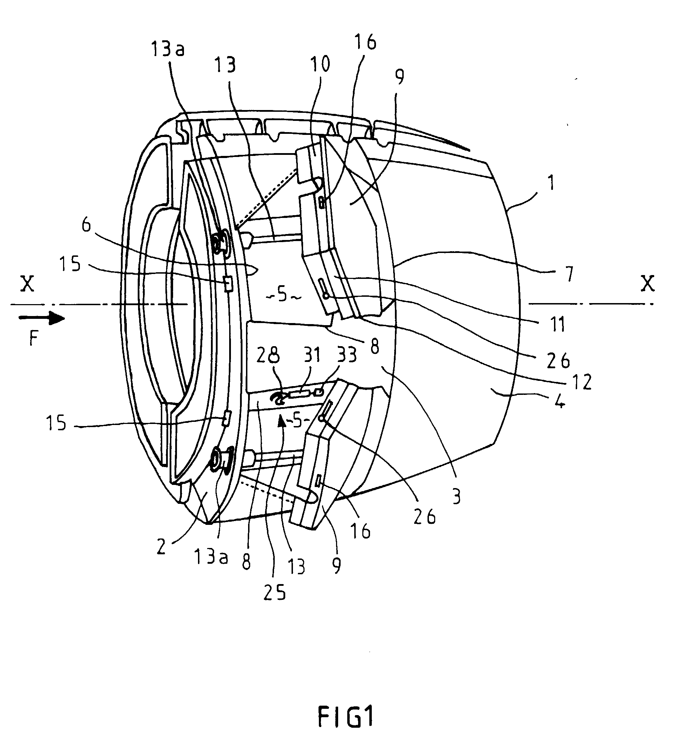

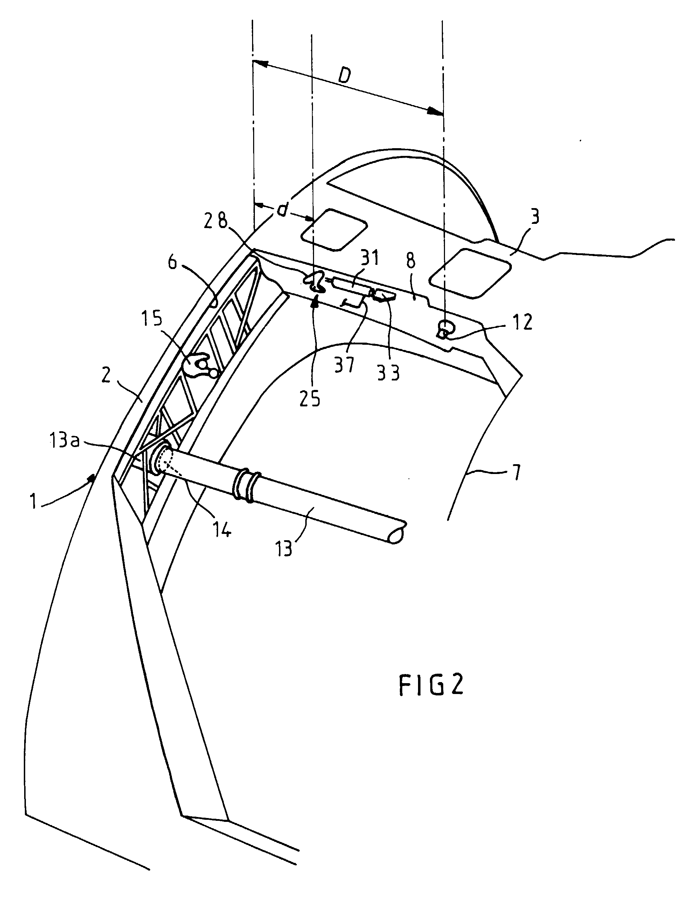

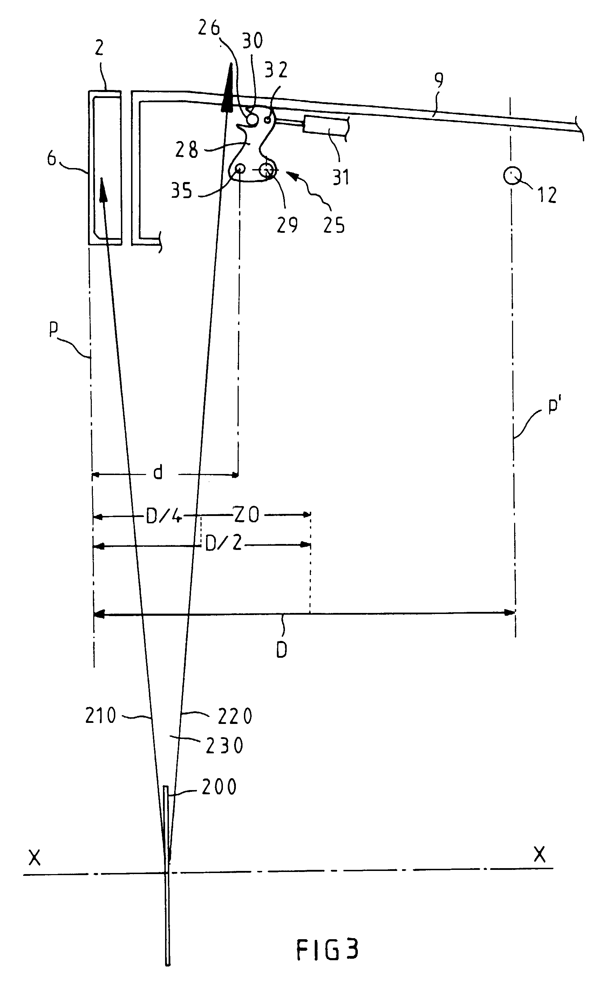

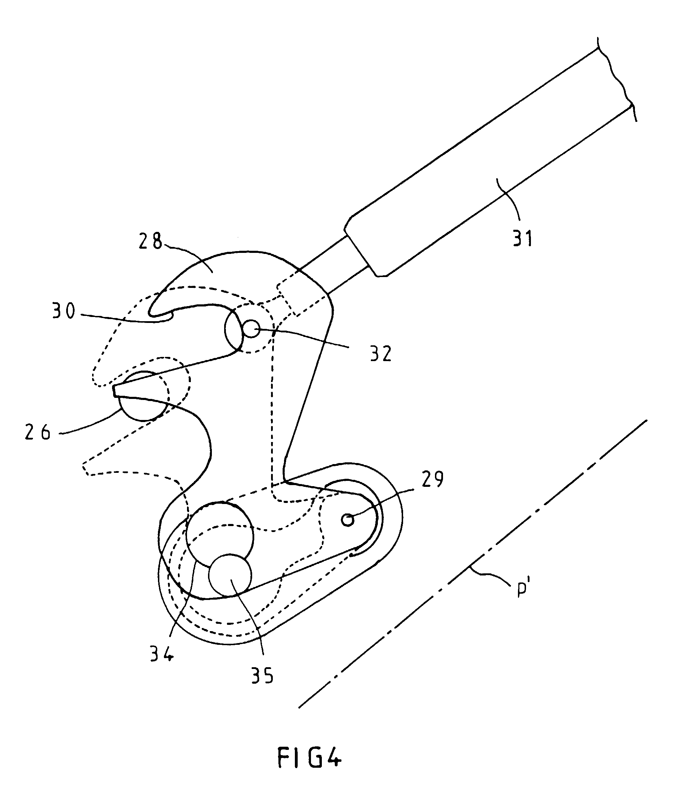

D'autres caractéristiques et avantages de l'invention apparaîtront au cours de la description ci-dessous d'une forme de réalisation de l'invention donnée à titre non limitatif, en référence aux dessins annexés dans lesquels :
. la figure 1 est une vue en perspective générale d'un arrière-corps de capotage pour moteur d'avion équipé d'une installation d'inversion de poussée ;
. la figure 2 est un détail à plus grande échelle de l'ouverture de déviation du flux de gaz moteur d'un moteur équipé du système de sécurité de l'invention ;
. la figure 3 est un schéma illustrant un incident de fonctionnement du moteur ; et
. la figure 4 est un détail à plus grande échelle d'une forme de réalisation préférée d'un verrou selon l'invention.

A la figure 1, on a représenté en 1 l'arrière-corps d'un capotage entourant un moteur (non représenté) et en X-X l'axe longitudinal dudit moteur. Cet arrière-corps 1 est constitué d'une structure fixe et rigide présentant un cadre annulaire amont 2 (dans le sens d'écoulement des gaz d'amont en aval matérialisé par la flèche F) ; des poutres latérales 3 ; et d'une virole aval annulaire 4.

La structure fixe de capotage est percée d'ouvertures 5 délimitées par le bord 6 du cadre 2, une découpe arrière 7 et le bord latéral 8 des poutres 3. Dans ces ouvertures 5 sont logées des portes basculantes 9 de forme sensiblement rectangulaires présentant un bord amont 10 et des bords latéraux 11. Les portes sont articulées sur les poutres latérales 3 par des pivots 12 tourillonnant dans les bords latéraux 11 des portes. Dans la face interne de chaque porte est attelée l'une des extrémités d'un vérin 13 de manoeuvre dont l'autre extrémité 13a est logée dans le cadre annulaire 2.

Dans la forme de réalisation représentée, chaque vérin 13 contient en 14 (figure 2) un mécanisme de verrouillage du vérin en position rentrée correspondant à la position de porte fermée, ce mécanisme de verrouillage, connu en soi, constituant une première sécurité. Cette disposition préférée n'est cependant pas obligatoire et ne constitue nullement une limitation de l'invention.

Pour chaque porte, un premier verrou de sécurité 15 est monté sur la face interne du cadre amont 2 et coopère avec un élément complémentaire 16 prévu sur le bord amont 10 de la porte. Cet ensemble de verrou 15-16 peut être de tout type approprié et en particulier du type décrit et revendiqué dans la demande de brevet français antérieure n° 2 683 860 du 14 Novembre 1991. Ces ensembles de verrous associés aux portes sont manoeuvrés par un circuit de commande spécifique indépendant du circuit d'actionnement des vérins 13.

Pour chacune des portes 9, un second verrou de sécurité 25 est prévu pour agir entre la poutre 3 et le bord latéral 11 de la porte. Comme on le voit mieux aux figures 2 et 3, le verrou 25 est constitué par un crochet 28 articulé de façon pivotante en 29 sur un axe solidaire du bord latéral 8 de la poutre. L'échancrure 30 du crochet est destinée à coopérer avec un ergot ou pivot 26 (figure 1) ménagé sur le bord latéral 11 de la porte, afin de maintenir celle-ci en position fermée.

Le pivotement du crochet 28 pour libérer le pivot 26 afin de permettre l'ouverture de la porte est permis grâce à un vérin d'actionnement 31 dont la tête est attelée au crochet en 32 et le pied est articulé à un support 33 solidaire du bord 8 et dont l'alimentation 37 (figure 2) est indépendante de celle des vérins 13 et de la commande des verrous 15.

Un dispositif d'interdiction de basculement du crochet similaire à celui prévu dans la demande de brevet antérieure citée plus haut est constitué par un doigt 35 destiné à coopérer avec un trou 34 du crochet et soumis à l'action d'un solénoïde (non représenté) et s'étendant transversalement au plan du crochet 28, ledit doigt étant monté à demeure dans la paroi du bord 8 de l'ouverture 5. Le circuit d'alimentation du solénoïde d'actionnement du doigt 35 est indépendant du circuit de commande des verrous 15 et 25.

Le doigt d'interdiction 35 est sollicité en permanence par un ressort (non représenté) en position sortie et prend appui contre la face pleine du crochet 28 lorsque celui-ci est en position ouverte (position en trait plein de la figure 4) provoquée par le vérin 31 pour libérer la porte lorsque l'on veut utiliser la position d'inversion de poussée. En revanche, dès que la porte se referme en position de croisière, le pivot 26 entraîne le basculement du crochet 28 dans sa position en trait interrompu de la figure 4 et dès que le doigt 35 se trouve en face du trou 34, il pénètre automatiquement dans le trou sous l'action de son ressort. Le déverrouillage du verrou ne peut alors se produire que si le solénoïde du doigt 35 est actionné volontairement via son circuit de commande. On notera que grâce à cette disposition, si le solénoïde ne peut être actionné à la suite par exemple de la destruction de son circuit d'alimentation, le verrou reste bloqué par le doigt 35 et ne peut pivoter sous l'action du vérin 31, ce qui interdit l'ouverture de la porte.

Comme on le voit aux figures 1 et 2, notamment, le crochet 28 du verrou est disposé entre le pivot de porte et le cadre annulaire 2 de la structure fixe. De même le pivot 26 destiné à coopérer avec le crochet 28 est situé entre le pivot de porte 12 et le bord amont de la porte (voir figure 1).

Selon la forme préférée de réalisation représentée, la distance d (figures 2 et 3) entre le verrou 25 et le bord 6 du cadre amont 2 est avantageusement comprise entre la moitié et le quart de la distance "D" entre le pivot de porte 12 et le bord 6 du cadre 2. Il en va de même naturellement pour la position du pivot 26 sur le bord latéral de porte.

Le choix de cette position est expliqué en référence à la figure 3. Dans ce schéma, on a représenté en X-X l'axe longitudinal du moteur, en P le plan du cadre 2 de la structure fixe contenant le pied des vérins 13 et les verrous 15 et en P' le plan des pivots. On a schématisé en 200 un des disques de la turbine qui est constituée d'un grand nombre de disques (non représentés) disposés en cascade les uns à côté des autres.

Comme on le voit, ce disque 200 est situé dans le voisinage immédiat du plan P. On a représenté par les flèches 210-220 les limites de la zone de trajectoire 230 qui peut être celle du disque 200 s'il venait à se briser et était projeté par la force centrifuge contre le capotage. L'angle entre les flèches 210 et 220 est celui qui est communément admis. On voit dans cet exemple que le cadre et les verrous 15 ainsi que les vérins 13 risquent d'être détériorés alors que les verrous 25 resteront en dehors de la trajectoire. Si le verrou 25 était situé plus en avant, c'est-à-dire dans le premier quart de la distance "D", il risquerait d'être également détérioré.

Certes, on pourrait souhaiter reculer davantage le verrou 25 vers le pivot 12, mais ceci n'est pas souhaitable, car plus on se rapproche du pivot 12 et plus les efforts mécaniques sur les verrous 25, dus à la pression s'exerçant sur la face interne de la porte, sont importants.

La position privilégiée du verrou dans la zone "ZO" située entre la moitié D/2 et le quart D/4 amont de la distance "D" allie donc la sécurité maximale en mettant le verrou 25 à l'abri d'une détérioration et des conditions de travail mécaniques optimales du verrou.

## Revendications

1. Installation d'inversion de poussée à portes pour moteur d'avion du type à réaction, ladite installation présentant une série de portes basculantes (9) articulées autour de pivots (12) dans une structure fixe d'un capotage entourant le moteur à peu près concentriquement à l'axe longitudinal (X-X) dudit moteur, lesdites portes (9) étant susceptibles de basculer, sous l'action d'un vérin de commande (13), entre une position escamotée dite "de croisière" dans laquelle elles obturent des ouvertures (5) pratiquées dans la structure fixe du capotage et une position déployée dite "d'inversion" dans laquelle lesdites portes (9) font saillie radialement vers l'extérieur du capotage en dégageant lesdites ouvertures (5) par lesquelles le flux de gaz moteur peut être dévié radialement vers l'extérieur, ladite installation d'inversion comportant un système de sécurité de portes destiné à interdire l'ouverture intempestive des portes d'inverseur, ledit système de sécurité étant constitué, pour chaque porte (9), d'au moins deux verrous indépendants (15, 25), chaque verrou agissant respectivement entre la structure fixe du capotage (6-8) et une partie de la porte (9), l'installation étant caractérisée en ce que
lesdits verrous (15,25) associés à chaque porte (9) sont, d'une part, écartés l'un de l'autre dans le sens de l'axe longitudinal (X-X) du moteur de façon à se trouver dans deux plans transversaux distincts et écartés et, d'autre part, associés respectivement à des circuits de commande d'ouverture indépendants l'un de l'autre.

2. Installation d'inversion selon la revendication 1 dans laquelle les portes (9) et les ouvertures (5) du capotage dans lesquelles elles sont logées ont une forme générale à peu près rectangulaire, caractérisée en ce que les deux verrous (15, 25) sont disposés respectivement sur deux côtés adjacents (6, 8) de chaque ouverture (5) de capotage.

3. Installation selon les revendications 1 et 2 dans laquelle la structure fixe de capotage présente un cadre annulaire amont (2) (par rapport au sens de circulation (F) des gaz) et des poutres longitudinales (3) délimitant respectivement les bords amont (6) et latéraux (8) des ouvertures (5) du capotage, caractérisée en ce que l'un des verrous (15) est monté sur le cadre annulaire amont (2) pour coopérer avec un élément complémentaire (16) du bord amont (10) de la porte (9), tandis que l'autre verrou (25) est monté sur une poutre longitudinale (3) pour coopérer avec un élément de verrou complémentaire (26) ménagé dans le bord latéral (11) de la porte.

4. Installation selon la revendication 3 dans laquelle les pivots (12) de porte sont logés dans les poutres longitudinales (3), caractérisée en ce que les verrous (25) montés sur les poutres (3) sont situés dans l'espace compris entre le pivot (12) de porte et le cadre annulaire amont (2).

5. Installation selon la revendication 4, caractérisée en ce que la distance (d) entre le verrou (25) et le cadre amont (2) est inférieure ou égale à la moitié de la distance (D) entre le cadre amont (2) et le pivot (12) de porte.

6. Installation selon l'une quelconque des revendications 4 ou 5, caractérisée en ce que le verrou (25) est situé à une distance (d) du cadre amont (2) comprise entre la moitié et le quart de la distance (D) entre le cadre amont (2) et le pivot (12) de porte.

7. Installation selon la revendication 6, caractérisée en ce que l'élément complémentaire (26) de verrou (25) est situé à une distance (d) du bord amont (10) de porte comprise entre la moitié et le quart de la distance (D) entre le bord amont (10) et le pivot (12) de porte.

8. Installation selon l'une quelconque des revendications 3 à 7, caractérisée en ce que le verrou (25) monté sur la poutre (3) de capotage a la forme d'un crochet (28) pivotant et l'élément complémentaire (26) de verrou porté par la porte est un ergot fixe.

9. Installation selon l'une quelconque des revendications 3 à 8, caractérisée en ce que, en position de porte fermée, le verrou (25) monté sur la poutre (3) de capotage, une fois en prise avec l'élément complémentaire (26) de verrou, est immobilisé en position par un mécanisme de blocage (35) automatique qui ne peut être libéré que par une action volontaire sur un circuit de commande indépendant de l'actionnement du verrou (25).

10. Installation selon l'une quelconque des revendications précédentes dans laquelle le basculement des portes (9) est réalisé par des vérins (13), chaque porte (9) étant attelée à un vérin (13), caractérisée en ce que ledit vérin constitue lui-même un troisième verrou de sécurité pour interdire l'ouverture intempestive de la porte grâce à un moyen de verrouillage (14) qu'il contient.

## Patentansprüche

1. Schubumkehrvorrichtung mit Klappen für ein Flugzeugtriebwerk vom Typ Strahltriebwerk, die eine Reihe von verschwenkbaren Klappen (9) aufweist, die an Drehzapfen (12) in einer feststehenden Struktur einer den Motor etwa konzentrisch zu seiner Längsachse (X-X) umgebenden Verkleidung angelenkt sind, wobei die Klappen (9) unter der Einwirkung einer Kolben-Zylinder-Einheit (13) zwischen einer Fahrtstellung genannten eingezogenen Stellung, in der sie in der feststehenden Struktur der Verkleidung vorgesehene Öffnungen (5) verschließen, und einer Umkehrstellung genannten ausgefahrenen Stellung verschwenkbar sind, in der die Klappen (9) an der Verkleidung radial nach außen vorstehen, indem sie die Öffnungen (5) freilegen, durch die der Treibgasstrom radial nach außen abgelenkt werden kann, wobei die Umkehrvorrichtung ein Klappensicherungssystem aufweist, das dazu bestimmt ist, die ungewollte Öffnung der Umkehrklappen zu verhindern, und das für jede Klappe (9) aus mindestens zwei unabhängigen Riegeln (15, 25) besteht, deren jeder zwischen der feststehenden Struktur der Verkleidung (6-8) und einem Teil der Klappe (9) wirkt, dadurch gekennzeichnet,
daß die jeder Klappe (9) zugeordneten Riegel (15, 25) einerseits in Richtung der Längsachse (X-X) des Motors voneinander entfernt sind, so daß sie in zwei verschiedenen und voneinander entfernten Querebenen liegen, und andererseits jeweils voneinander unabhängigen Kreisen zur Steuerung der Öffnung zugeordnet sind.

2. Umkehrvorrichtung nach Anspruch 1, in der die Klappen (9) und die Öffnungen (5) der Verkleidung, in denen sie angeordnet sind, eine etwa rechteckige allgemeine Form haben, dadurch gekennzeichnet, daß die beiden Riegel (15, 25) auf zwei benachbarten Seiten (6, 8) jeder Verkleidungsöffnung (5) angeordnet sind.

3. Vorrichtung nach den Ansprüchen 1 und 2, in der die feststehende Verkleidungsstruktur einen (in Strömungsrichtung (F) der Gase) eingangsseitigen ringförmigen Rahmen (2) und Längsträger (3) aufweist, die die eingangsseitigen (6) bzw. die seitlichen (8) Ränder der Öffnungen (5) der Verkleidung abgrenzen, dadurch gekennzeichnet, daß einer der Riegel (15) auf dem eingangsseitigen ringförmigen Rahmen (2) montiert ist, um mit einem ergänzenden Element (16) des eingangsseitigen Rands (10) der Klappe (9) zusammenzuwirken, während der andere Riegel (25) auf einem Längsträger (3) montiert ist, um mit einem im seitlichen Rand (11) der Klappe vorgesehenen ergänzenden Riegelelement (26) zusammenzuwirken.

4. Vorrichtung nach Anspruch 3, in der die Klappendrehzapfen (12) in den Längseträgern (3) angeordnet sind, dadurch gekennzeichnet, daß die auf den Trägern (3) montierten Riegel (25) in dem Raum zwischen dem Klappendrehzapfen (12) und dem eingangsseitigen ringförmigen Rahmen (2) angeordnet sind.

5. Vorrichtung nach Anspruch 4, dadurch gekennzeichnet, daß der Abstand (d) zwischen dem Riegel (25) und dem eingangsseitigen Rahmen (2) kleiner oder gleich dem halben Abstand (D) zwischen dem eingangsseitigen Rahmen (2) und dem Klappendrehzapfen (12) ist.

6. Vorrichtung nach einem der Ansprüche 4 oder 5, dadurch gekennzeichnet, daß der Riegel (25) in einem Abstand (d) vom eingangsseitigen Rahmen (2) angeordnet ist, der die Hälfte bis ein Viertel des Abstands (D) zwischen dem eingangsseitigen Rahmen (2) und dem Klappendrehzapfen (12) beträgt.

7. Vorrichtung nach Anspruch 5, dadurch gekennzeichnet, daß das ergänzende Element (26) des Riegels (25) in einem Abstand (d) vom eingangsseitigen Klappenrand (10) angeordnet ist, der die Hälfte bis ein Viertel des Abstands (D) zwischen dem eingangsseitigen Rand (10) und dem Klappendrehzapfen (12) beträgt.

8. Vorrichtung nach einem der Ansprüche 3 bis 7, dadurch gekennzeichnet, daß der auf dem Verkleidungsträger (3) montierte Riegel (25) die Form eines verschwenkbaren Hakens (28) hat und das von der Klappe getragene ergänzende Riegelelement (26) ein feststehender Stift ist.

9. Vorrichtung nach einem der Ansprüche 3 bis 8, dadurch gekennzeichnet, daß der auf dem Verkleidungsträger (3) montierte Riegel (25) in der geschlossenen Klappenstellung nach Ineingriffkommen mit dem ergänzenden Riegelelement (26) in seiner Stellung durch einen automatischen Sperrmechanismus (35) blockiert wird, der nur durch eine absichtliche Einwirkung auf einen unabhängigen Steuerkreis zur Betätigung des Riegels (25) freigegeben werden kann.

10. Vorrichtung nach einem der vorhergehenden Ansprüche, in der das Verschwenken der Klappen (9) durch Kolben-ZylinderEinheiten (13) bewirkt wird, wobei jede Klappe (9) mit einer Kolben-Zylinder-Einheit (13) gekoppelt ist, dadurch gekennzeichnet, daß die Kolben-Zylinder-Einheit dank einer in ihr enthaltenen Verriegelungseinrichtung (14) selbst einen dritten Sicherungsriegel zur Sperrung der ungewollten Öffnung der Klappe bildet.

## Claims

1. A thrust-reversal installation with doors for an aircraft engine of the jet type, said installation comprising a series of pivoting doors (9) articulated about axis (12) in a stationary structure of a fairing surrounding the engine more or less concentrically with the longitudinal axis (X-X) of said engine, said doors (9) being capable of pivoting, under the action of a control actuator (13), between a stowed so-called "cruise" position in which they close off openings (5) made in the stationary structure of the fairing, and a deployed so-called "reversal" position in which said doors (9) project radially outward from the fairing, freeing said openings via which the flow of propulsive gas may be deflected radially outward, said reversal installation including a door safety system intended to prevent the inadvertent deployment of the reverser doors, said safety system being made up, for each door (9), of at least two independent locks (15, 25) acting respectively between the stationary structure of the fairing (6, 8) and a part of the door (9), said installation being characterized in that the locks (15, 25) associated with each door (9) are, on the one hand, separated from one another in the direction of the longitudinal axis (X-X) of the engine so as to be located within two distinct and separated cross planes and, on the other hand, associated respectively with circuits for controlling the deployment, the circuits being independent of one another.

2. The reversal installation as claimed in claim 1, in which the doors (9) and the openings (5) in the fairing in which they are housed have a somewhat rectangular overall shape, characterized in that the two locks (15, 25) are located respectively on two adjacent sides (6, 8) of each fairing opening (5).

3. The installation as claimed in claims 1 and 2 in which the stationary fairing structure comprises an upstream (with respect to the direction of flow (F) of the gases) annular frame (2) and longitudinal beams (3) respectively delimiting the upstream and lateral edges (6, 8) of the openings (5) in the fairing, characterized in that one of the locks (15) is mounted on the upstream annular frame (2) in order to interact with a complementary element (16) of the upstream edge (10) of the door (9), while the other lock (25) is mounted on a longitudinal beam (3) in order to interact with a complementary lock element (26) formed in the lateral edge (11) of the door.

4. The installation as claimed in claim 3, in which the door axis (12) are housed in the longitudinal beams (3), characterized in that the locks -(25) mounted on the beams (3) are situated in the space lying between the door axis (12) and the upstream annular frame (2).

5. The installation as claimed in claim 4, characterized in that the distance (d) between the lock (25) and the upstream frame (2) is less than or equal to half the distance (D) between the upstream frame (2) and the door axis (12).

6. The installation as claimed in any of claims 4 or 5, characterized in that the lock (25) is situated at a distance (d) from the upstream frame (2) which lies between half and a quarter of the distance (D) between the upstream frame (2) and the door axis (12).

7. The installation as claimed in claim 6, characterized in that the complementary lock element (26) is situated at a distance (d) from the upstream door edge (10) which lies between half and a quarter of the distance (D) between the upstream edge (10) and the door axis (12).

8. The installation as claimed in any of claims 3 to 7, characterized in that the lock (25) mounted on the fairing beam (3) has the shape of a pivoting hook (28), and the complementary lock element (26) borne by the door is a stationary stub.

9. The installation as claimed in any of claims 3 to 8, characterized in that, in the door-closed position, the lock (25) mounted on the fairing beam (3), once in engagement with the complementary lock element (26), is held fast in position by an automatic immobilizing mechanism (35) which can be released only through a deliberate action on a control circuit independent of the actuation of the lock (25).

10. The installation as claimed in any of the preceding claims, in which the pivoting of the doors (9) is achieved by actuators (13), each door (9) being coupled to an actuator (13), characterized in that said actuator itself constitutes a third safety lock for preventing the inadvertent deployment of the door by virtue of a locking means (14) which it contains.
